# EUROPEAN PATENT APPLICATION

(11) **EP 2 242 268 A1**
(43) Date of publication of application: **20.10.2010**
(21) Application number: 09250465.3
(22) Date of filing: 23.02.2009
(51) Int. Cl.: H04N 7/16, H04N 7/173

(54) **Streamed content distribution service**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A content distribution platform (1) is arranged to distribute content by streaming over a communications network (4). The content provider (2) or consumer (3) provides the content distributor (1) with marker data indicating where secondary content is to be inserted in a primary content stream. When the primary data is requested from a client platform (3), secondary content is inserted at the markers in the content stream. The secondary content to be inserted may be advertising material, data related to the primary data, or topical subjects, selected according to one or more characteristics associated with the client platform (3).

## Description

This invention relates to streamed content distribution services, that is to say services which deliver video or other content provided by a content provider to one or more content consumers.

The content provider maintains content for distribution on a content platform, which is a system for storing, managing, retailing, and delivering content. Delivery to the content consumers may be through a telecommunications network such as the internet, or a dedicated dial-up telephone service, or by other means such as cable TV, satellite, or over the air (terrestrial) broadcast.

The content may be broadcast simultaneously to several users at a predetermined broadcast time, or may be transmitted to each user (herein referred to as "content consumers") on request, at a time of their own choosing. Different delivery methods are suited to these different modes of dissemination.

The cost of providing such a service may be borne by the content consumer paying a subscription for the service, but many services are funded by advertising, usually placed in breaks in the transmission. The problem with such interpolated content is that it is unlikely to be of interest or relevance to all of the audience - in particular with on-demand services the interpolated information may become out-of-date unless it is periodically updated.

In the present specification the main piece of content the Content Consumer wishes to receive is referred to as "Primary Content", and the additional pieces of content that are interpolated are referred to as "Secondary Content".

The present invention provides a means by which the interpolated secondary content can be tailored to the individual content consumers.

According to the present invention, there is a provided a method of enabling a content distribution platform to distribute content streamed over a communications network, the method comprising:
providing the content distribution platform with marker data indicating where secondary content is to be inserted in a primary content stream,
providing the primary content stream to a host platform;
receiving a request from a client platform for said primary content at said host platform;
and dynamically inserting said secondary content into said content stream, the secondary content being selected based on one or more characteristics associated with said client platform.

The first and second inputs may be generated from locally held content stores, or they may be feeds from other platforms to allow their content to be distributed by the distribution platform. Such feeds may be live transmissions or recordings.

Preferably, there is provided a user profile store for storing data relating to the user of the requesting client platform; and the content assembly processor is controlled to assemble the stream in accordance with a profile of the requesting user retrieved from the user profile store.

In a preferred arrangement, either or both content stores are associated with content publishing processors for allowing contributors to add content to the respective store. The content publishing processor for the primary content may include a facility for applying markers to the content. Markers can be placed using software that the content provider uses to manage content, either in-house to the content provider or accessed through an interface into the content platform. The content publishing processor for the secondary content includes a facility for providing metadata associated with the secondary content for comparison with profile data relating to individual requesting users.

The interpolated secondary content may be advertising material, or it may be data related to the primary content in some way, but tailored to the particular interests of the user, for example in a movie, extra content may be available on subjects such as the locations shown in the movie, biographical information about the actors, the historical context of the plot, or how special effects or stunts were produced. Data interpolated into a current affairs production may, for example, include information of geographically specific relevance to the user, such as local news or weather reports. News on a specialist subject such as financial news or sporting events, tailored to the particular preferences of the user, may also be provided.

The content distribution platform may allow consumers to select for themselves where to place the "markers" in a content asset they are viewing. In other words, instead of fixed advertising breaks, the content consumer can choose when to receive an advertising break. The content provider may be enabled to place constraints on this, such as the number of "markers" in a particular piece of content or the maximum time allowed between "markers". Provision may be made for content consumers to set "templates" of where to mark content so they can place the markers in the same places in a piece of content automatically.

The invention may also provide for a content client receiving content from a content distribution platform having a data collection facility for monitoring usage and behaviour of the individual content consumers and reporting statistical data back to the content distribution platform. Such data may include the location in the data content where the content consumer placed the markers, the length of time actually viewed, and the number of markers viewed. Based on those statistics the Content Platform may update the Content Consumers profile, viewing habits, content rankings, etc.

An embodiment of the invention is depicted schematically in the Figures, in which:
Figure 1 depicts the various elements co-operating to perform the invention
Figure 2 depicts the functional elements of the content distribution platform of Figure 1 in more detail
Figure 3 illustrates the data flows taking place between the platforms co-operating to perform the invention during the operation of the invention.
Figure 4 is a schematic representation of a streamed content segment as assembled for transmission to a user.
Figure 5 shows in more detail the data flows taking place in uploading the data to the content distribution platform
Figure 6 shows in more detail the data flows taking place in downloading the data from the content distribution platform

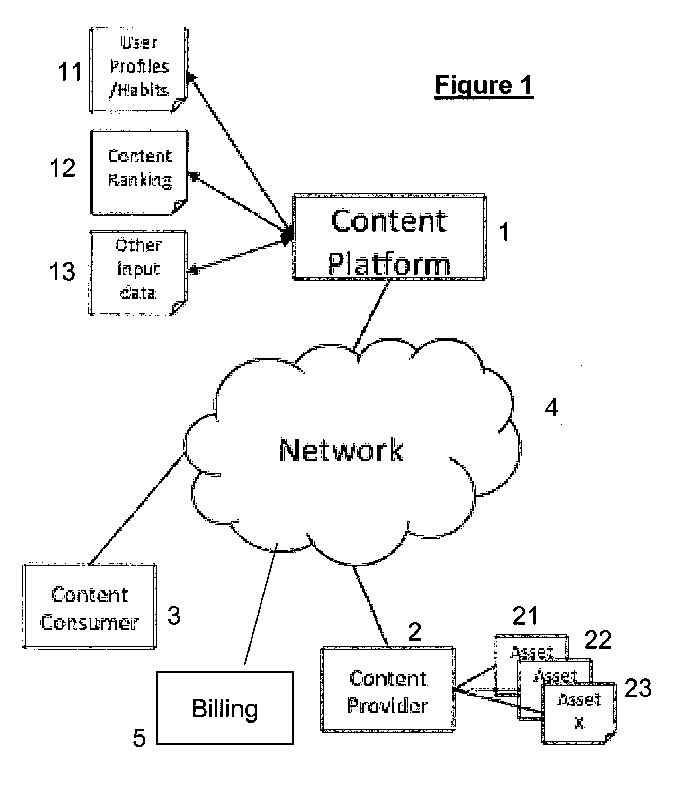

Figure 1 depicts a content platform 1, content provider 2 and content consumer 3 interconnected by a communications network 4 such as the Internet. In practice there may be many content providers and content consumers. The content provider has one or more assets 21, 22, 23 to be made available to a consumer 3 through the medium of the platform 1. The platform maintains a database 11, 12, 13 storing various attributes of the users (11), available content (12) and other data (13). A billing platform 5 is also depicted.

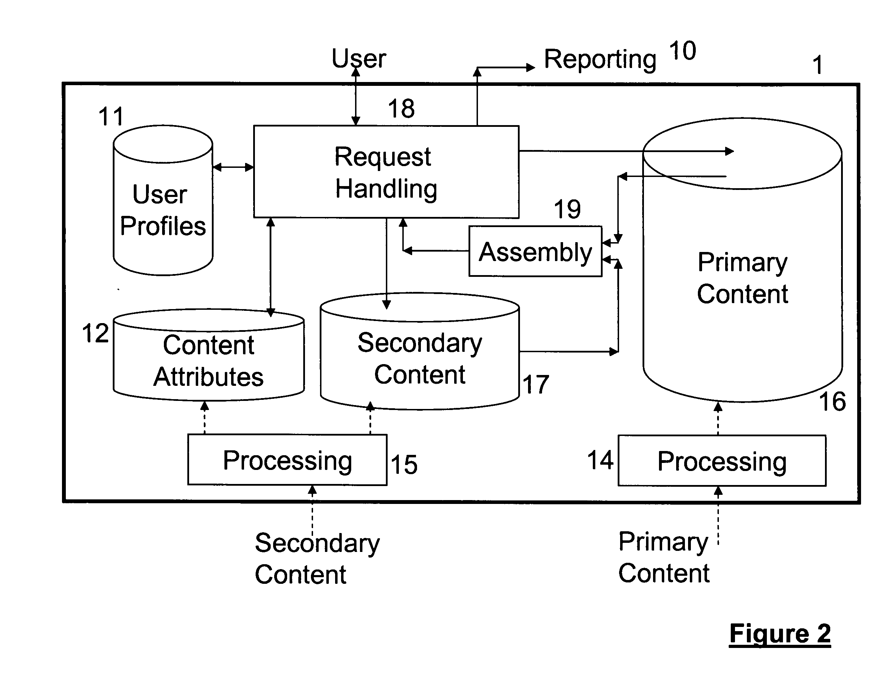

Figure 2 depicts the functional elements of the content distribution platform 1 in more detail. The platform performs two principal functions: upload from content providers (depicted in dotted lines) and download to consumers (depicted in full lines). Primary content, e.g. a movie, is uploaded from a content provider to a primary input processor 14 which then stores the primary content in a first database 16. The processing includes the insertion of markers in the primary content to indicate the positions in the content at which secondary content is to be interpolated. The content may be stored locally to the platform itself, or the platform may simply store address data from which the content is to be downloaded as required, together with data identifying the location in that content at which the markers are to be placed.

Secondary content, e.g. advertising material, local-interest material, or other content, is uploaded from a content provider (which may be the same as the primary content provider, but generally will be different) to a secondary input processor 15 which then stores the secondary content in a second database 17. As with the primary content, the secondary content may be stored remotely, the secondary content store identifying the addresses from which the content may be retrieved. Associated with this content is a set of content attributes indicative of the relevance or interest of the secondary content to different types of content consumer, and these attributes are stored in a separate attribute store 12.

A request handling unit 18 is configured to receive content requests from consumers 3 and, using previously-stored user profile data 11 and the content attributes 12, identifies secondary content 17 that would be appropriate for interpolation into the specific primary content requested to be delivered to that specific consumer. The request handling unit 18 is arranged to retrieve the required primary content 16 and secondary content 17. A datastream assembly unit 19 is provided to assemble the required content into a single stream, which can be delivered by the request handler 18 to the consumer which requested it.

The request handler 18 may also incorporate a reporting function which transmits an output 10 to a billing platform 5, to record usage of the system, for example for billing the users and/or paying the content providers according to usage.

User profile data may be delivered to the user profile data store 11 by the user himself, the user's service provider (for example according to the level of subscription paid for) or may be updated dynamically by the content platform itself in response to user activity (for example preferences for particular types of content).

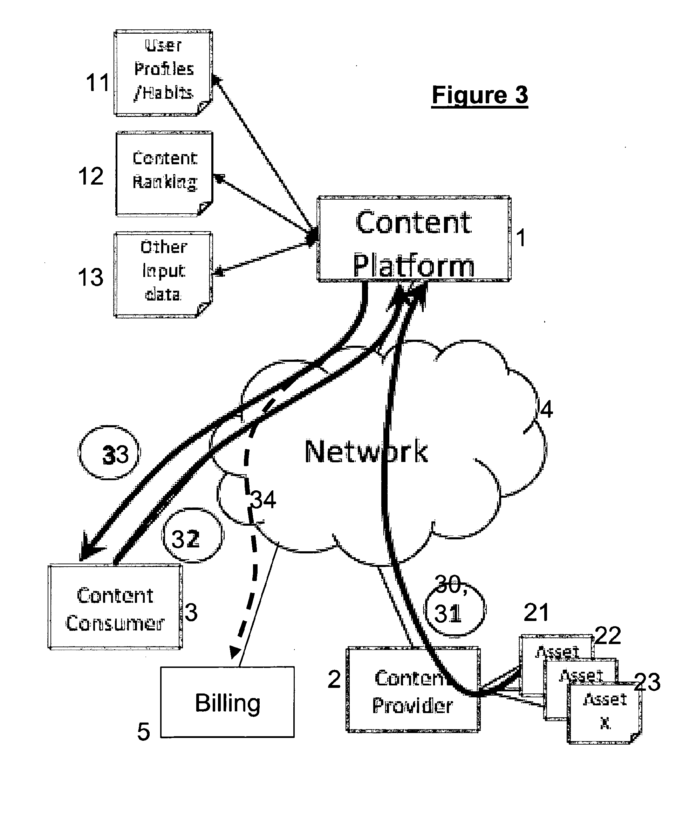

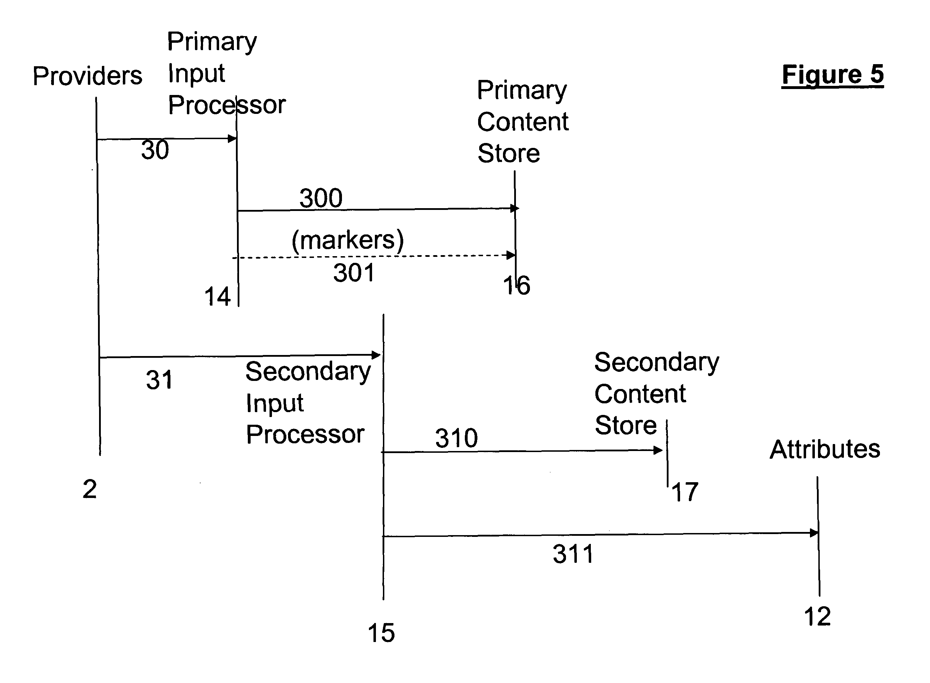

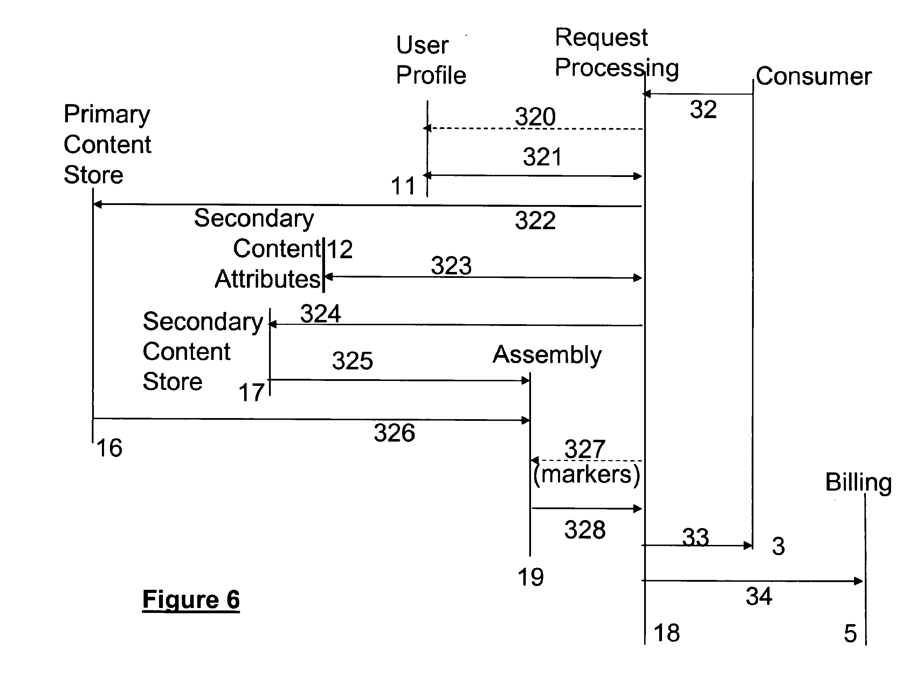

Figure 3 illustrates the main data flows taking place between the platforms depicted in Figure 1. Figures 5 and 6 illustrate the flows taking place between the individual functional elements of the content distribution platform depicted in Figure 2.

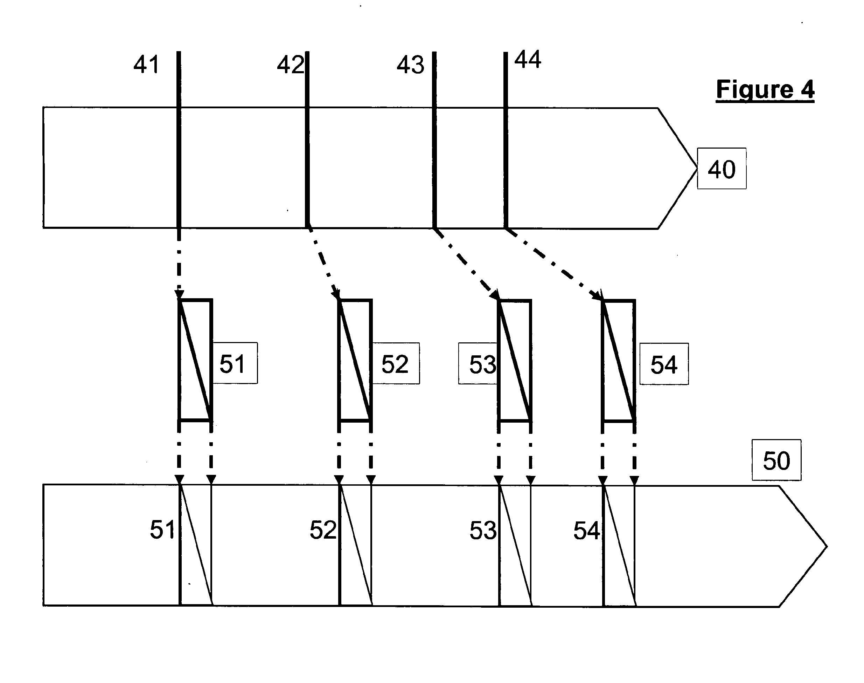

Initially the content providers 2 download content to the platform 1 (steps 30, 31). Content is of two categories: primary and secondary. These may be provided by the same provider or by different ones. As depicted in Figure 4, the primary content typically consists of a long video stream 40. The primary content is stored in the content store 16 (step 300). At the time of loading the primary content, markers 41, 42, 43, 44 may be applied to the stream 40 (step 301, Figure 5). As previously mentioned, these markers may instead be applied by the content consumer 3 immediately prior to download (step 327, Figure 6).

The secondary content consists of shorter inserts 51, 52, 53, 54 (Figure 4). These may be related to each other, or they may be delivered separately. The secondary content is stored in a content store 17 (step 310). Associated with the secondary content is attribute data, for example metadata, relating to the content of the secondary content. This attribute data is stored in a separate store 12 (step 311).

Subsequently, consumers 3 request particular content 40 from the Content Platform 1 (step 32). This request is received by the request processor 18 which identifies and retrieves the data to be returned to the user.

The request processor 18 first retrieves data relating to the user 3 from the user profile store 11 (step 321). This profile may include information such as the user's interests, any marker templates he has set up, and billing data. The request 32 may also trigger an update (320) to the profile 11.

The request processor 18 now retrieves the requested content from the primary content store 16 (step 322) and this is delivered to a content assembler 19 (step 326). The processor also queries the secondary content attribute register 12 (step 323) to identify items of secondary content appropriate to deliver with the requested content (16) , taking into account the user profile previously retrieved (321). The results of this query 323 are used to select some secondary content to be requested from the secondary content store 17 (step 324) and this is also returned to the assembler 19.

The assembler 19 assembles the final stream to be delivered by identifying markers either previously embodied in the primary content 326 (see step 301 above) or delivered from the request processor 18 (step 327) either as part of the request 32 from the consumer 3 or derived from the user's profile (11). The markers 41, 42, 43, 44 identify the locations in the primary stream 40 where the secondary content 51, 52, 53, 54 is to be inserted. The assembled content is then returned to the request processor 18 (step 328) for delivery (e.g. downloading or streaming) to the consumer 3 (step 33). Usage data 34, is delivered to a usage monitor 5 for example for billing purposes,

The secondary content may be inserted directly into the primary content by the platform 1, thereby generating a single file or stream form delivery to the content consumer. Alternatively, a playlist of primary content 40 and secondary content 51, 542, 53, 54 may be transmitted to the user 3, for direct retrieval by the user of the various components from the providers' own platforms. The playlist generated by the assembler 19 includes an indication of where the markers 41, 42, 43, 44 are located in the primary content 40, to allow the consumer to assemble the content locally.

The request handler 18 may use any criterion, or combination of criteria to determine which secondary content to insert instead of the "markers". It may for example be simply random, or based on some ranking 12 of the primary and/or secondary content available, or based on the Content Consumer's profile (11) e.g. previous viewing habits etc. It may also be based on some categorisation of the main content asset 16, for example by inserting secondary content likely to be of interest to the likely audience for the primary content.

Content Consumers 3 may be given the facility to select where to place the "markers" in a content asset they are viewing, for example the content consumer can choose how many breaks are to be inserted. The content providers can place constraints on this, for example by specifying the total duration of the secondary content to be inserted, or by only allowing breaks at certain points in the stream. Content consumers may be permitted to set "templates" of where to mark content so they can automatically place the markers in the same places in different pieces of content.

The content client device 3 may be arranged to report statistics to the content platform 1, such as where the content consumer placed the markers, length of time actually viewed, number of markers viewed and other information that may be useful to the content platform. Based on those statistics the content platform 1 may also update the content consumer's profile in the user profile store 11, such as viewing habits, content rankings, etc.

The content platform 1 may also have an output 10 to report usage data to the content provider(s) 2, for example by crediting a fee to the primary content providers for each piece of content "inserted" at a marker, and billing the secondary content providers accordingly.

## Claims

1. A method of enabling a content distribution platform to distribute content streamed over a communications network, the method comprising:
providing the content distribution platform with marker data indicating where secondary content is to be inserted in a primary content stream,
providing the primary content stream to a host platform;
receiving a request from a client platform for said primary content at said host platform;
and dynamically inserting said secondary content into said content stream, the secondary content being selected based on one or more characteristics associated with said client platform.

2. A method according to claim 1, wherein the markers are applied to the content by the source of the content.

3. A method according to claim 1, wherein the markers are applied to the content by the client platform.

4. A method according to claim 1, claim 2 or claim 3 wherein, when said primary content stream is played on said client platform, replay of said secondary content generates a viewing indicator which is sent to the content distributor.

5. A method as claimed in claim 4, wherein said viewing indicator is processed by an intermediate server arranged to provide an electronic transfer of funds to the content distributor.

6. A method as claimed in claim 1, claim 2, claim 3, claim 4 or claim 5, wherein the insertion of said secondary content is based on one or more characteristics of such content previously provided to said client platform.

7. A method as claimed in claim 6, wherein said secondary content is inserted based on a profile associated with a user of said client platform.

8. A content distribution host platform for delivering content streams to one or more content client platforms, comprising:
a first input for primary content data, the primary content data including marker data indicating points in the content at which further data may be inserted;
a secondary content input for providing secondary content data for insertion into the primary content data;
a request processor for receiving content requests from a client platform;
a content assembly processor for extracting data from the first input in accordance with a user request and extracting data from the secondary content input, and assembling a data stream for delivery to a requesting user by inserting the secondary content into the primary content at the points indicated by the marker data,
and a distribution processor for delivering the assembled content to the client platform.

9. A content distribution host platform according to claim 8, comprising a monitoring facility for reporting viewing data relating to the distributed content to the originator of the said content.

10. A content distribution host platform according to claim 9, wherein said monitoring facility comprises an intermediate server arranged to provide an electronic transfer of funds to the content distributor.

11. A content distribution host platform according to claim 8, claim 9 or claim 10, comprising a user profile store for storing data relating to the users of the requesting client platforms; the content assembly processor being controlled to assemble the stream in accordance with a profile of the requesting user retrieved from the user profile store.

12. A content distribution host platform according to claim 11, wherein the first content input is associated with a respective content store, with an associated publishing processor input for allowing content to be added to the store.

13. A content distribution host platform according to claim 12, wherein the content publishing processor associated with the first content input includes a facility for applying markers to the content.

14. A content distribution host platform according to claim 12, wherein the platform includes an input for delivery of instructions from the client platform to insert markers at specified points in the content.

15. A content distribution host platform according to claim 8, claim 9, claim 10, claim 11, claim 12, claim 13 or claim 14, wherein the second content input is associated with a respective content store, with an associated publishing processor input for allowing content to be added to the store.

16. A content distribution host platform according to claim 15, wherein the content publishing processor associated with the second content input includes a profiling facility for insertion of metadata to the secondary content for comparison with profile data relating to individual requesting users.
